# EUROPEAN PATENT SPECIFICATION

(11) **EP 3 583 143 B1**
(45) Date of publication and mention of the grant of the patent: **25.11.2020**
(21) Application number: 18704014.2
(22) Date of filing: 09.02.2018
(51) Int. Cl.: C08F 293/00, B29C 67/00, C08L 53/00, B33Y 70/00

(54) **METHOD FOR MANUFACTURING A THREE-DIMENSIONAL OBJECT**
VERFAHREN ZUR HERSTELLUNG EINES DREIDIMENSIONALEN OBJEKTS
PROCÉDÉ DE FABRICATION D'UN OBJET TRIDIMENSIONNEL

(30) Priority: 16.02.2017 EP 17156541
(43) Date of publication of application: 25.12.2019
(73) Proprietor: Solvay Specialty Polymers Italy S.p.A., 20021 Bollate (MI) (IT)
(72) Inventor: AVATANEO, Marco, 20135 Milano (IT); DOSSI, Marco, 20162 Milano (MI) (IT); FANTONI, Matteo, 20020 Vanzaghello (MI) (IT); COLAIANNA, Pasqua, 20100 Milano (IT); MANZONI, Claudia, 40134 Bologna (IT)
(74) Representative: Benvenuti, Federica
(86) International application number: PCT/EP2018/053339
(87) International publication number: WO 2018/149758

(56) References cited:
- WO-A1-2016/171191
- WO-A2-2007/133912
- US-A- 5 612 419

## Description

### Cross-Reference to Related Application

This application claims priority to European application No. 17156541.9 filed on February 16, 2017.

### Technical Field

Additive manufacturing technologies, otherwise often referred as 3D printing techniques, including in particular filament fabrication techniques, have rapidly evolved during the past few years, in particular in the field of prototyping, and have gained enormous success because of their well-known advantages in terms of flexibility, accessibility of designs that simply could not be produced physically in any other way, mass customization, tool-less approaches, and sustainability profile.

Additive manufacturing systems are generally used to print or otherwise build 3D parts from digital representations of the 3D parts using one or more additive manufacturing techniques. Examples of commercially available additive manufacturing techniques include extrusion-based techniques, jetting, selective laser sintering, powder/binder jetting, electron-beam melting, and stereolithography processes. For each of these techniques, a digital representation of the 3D part is initially sliced into multiple horizontal layers. For each sliced layer, a tool path is then generated, which provides instructions for the particular additive manufacturing system to print the given layer.

For example, in an extrusion-based additive manufacturing system, a 3D part may be printed from a digital representation of the 3D part in a layer-by-layer manner by extruding a flowable part material. The part material is extruded through an extrusion tip carried by a print head of the system, and is deposited as a sequence of roads on a platen in an x-y plane. The extruded part material fuses to previously deposited part material, and solidifies upon a drop in temperature. The position of the print head relative to the substrate is then incremented along a z-axis (perpendicular to the x-y plane), and the process is then repeated to form a 3D part resembling the digital representation.

A variety of materials, thermoplasts or thermosets, have been proposed, and are already presently supplied under different forms, for use in 3D printing devices, including notably under the form of filaments for use in fused filament additive manufacturing devices.

Within this area, fluoromaterials are attracting increasing attention because of their performances' profile which may cope with requirements for being used in 3D printing processes.

Indeed, fluorinated and fully fluorinated plastomeric materials display high thermal and chemical resistance if compared with non-fluorinated plastics typically used in 3D printing.

Now, fluoropolymers have to be printed at high temperatures, varying between 200°C and 450°C. Under these conditions, HF and other acid and by-products can be generated by thermal degradation of the fluorinated polymers with any of the possible following drawbacks:
- release in the atmosphere of harmful chemicals;
- corrosion of metal components of the 3D printer;
- polymer discoloration;
- chemical attack towards other polymers and materials (like silica).

There is hence a need for fluorinated polymers which display the chemical and thermal resistance of fluorinated plastics but with possess improved processing performances, so that they can be melt processed at lower temperature and used in a 3D printer.

On the other side, segmented fluorinated block copolymers are generally known in the art. For instance, notably US 5605971 (AUSIMONT SPA) 25.02.1997 , US 5612419 (AUSIMONT SPA) 18.03.1997 , US 6207758 (AUSIMONT SPA) 27.03.2001 disclose fluorinated thermoplastic elastomers including plastomeric segment and elastomeric segment, whereas elastomeric segments may be of different types, including e.g. segments including vinylidene fluoride (VDF) recurring units and/or segments including tetrafluoroethylene (TFE) recurring units and whereas plastomeric segment may equally be of different types, such as segments comprising TFE units, segments comprising VDF units, segments comprising ethylene, propylene or isobutylene units, in combination with other units.

### Summary of invention

The Applicant has now surprisingly found that certain fluorinated thermoplastic elastomers, as below detailed, are such to address and cope the challenging requirements expressed above for being processed through additive manufacturing techniques, thanks to their surprising ability to possess better processability at high shear rate than corresponding fluorinated thermoplasts, which possess similar product profile and hence performances, offering hence advantages in throughput and part design accurate control, containment of degradation, reduction of fumes, and yet delivering parts with outstanding chemical and thermal resistance.

The present invention hence is directed to a method for manufacturing a three-dimensional object [object (3D)] using an additive manufacturing system, comprising:
- generating a digital representation of the three-dimensional object, and slicing the same into multiple horizontal layers, so as to generate printing instructions for each of the said horizontal layers;
- printing layers of the object (3D) from a part material [composition (C)] comprising at least one fluorinated thermoplastic elastomer [polymer (F-TPE)] comprising:
- at least one elastomeric block (A) consisting of a sequence of recurring units, said sequence comprising recurring units derived from at least one fluorinated monomer, said block (A) possessing a glass transition temperature of less than 25°C, as determined according to ASTM D3418, and
- at least one thermoplastic block (B) consisting of a sequence of recurring units, said sequence comprising recurring units derived from at least one fluorinated monomer,
wherein the crystallinity of said block (B) and its weight fraction in the polymer (F-TPE) are such to provide for a heat of fusion of the polymer (F-TPE) of at least 2.5 J/g, when determined according to ASTM D3418.

### Description of embodiments

The fluorinated thermoplastic elastomer [polymer (F-TPE)]

For the purpose of the present invention, the term "elastomeric", when used in connection with the "block (A)" is hereby intended to denote a polymer chain segment which, when taken alone, is substantially amorphous, that is to say, has a heat of fusion of less than 2.0 J/g, preferably of less than 1.5 J/g, more preferably of less than 1.0 J/g, as measured according to ASTM D3418.

For the purpose of the present invention, the term "thermoplastic", when used in connection with the "block (B)", is hereby intended to denote a polymer chain segment which, when taken alone, is semi-crystalline, and possesses a detectable melting point, with an associated heat of fusion of exceeding 10.0 J/g, as measured according to ASTM D3418.

The fluorinated thermoplastic elastomer of the composition (C) of the invention is advantageously a block copolymer, said block copolymer typically having a structure comprising at least one block (A) alternated to at least one block (B), that is to say that said fluorinated thermoplastic elastomer typically comprises, preferably consists of, one or more repeating structures of type (B)-(A)-(B). Generally, the polymer (F-TPE) has a structure of type (B)-(A)-(B), i.e. comprising a central block (A) having two ends, connected at both ends to a side block (B).

The block (A) is often alternatively referred to as soft block (A); the block (B) is often alternatively referred to as hard block (B).

The term "fluorinated monomer" is hereby intended to denote an ethylenically unsaturated monomer comprising at least one fluorine atom.

The fluorinated monomer may further comprise one or more other halogen atoms (CI, Br, I).

Any of block(s) (A) and (B) may further comprise recurring units derived from at least one hydrogenated monomer, wherein the term "hydrogenated monomer" is intended to denote an ethylenically unsaturated monomer comprising at least one hydrogen atom and free from fluorine atoms.

The polymer (F-TPE) typically comprises, preferably consists of:
- at least one elastomeric block (A) selected from the group consisting of:
   (1) vinylidene fluoride (VDF)-based elastomeric blocks (A_{VDF}) consisting of a sequence of recurring units, said sequence comprising recurring units derived from VDF and recurring units derived from at least one fluorinated monomer different from VDF, said fluorinated monomer different from VDF being typically selected from the group consisting of:
      (a) C₂-C₈ perfluoroolefins such as tetrafluoroethylene (TFE), hexafluoropropylene (HFP);
      (b) hydrogen-containing C₂-C₈ fluoroolefins different from VDF, such as vinyl fluoride, trifluoroethylene (TrFE), hexafluoroisobutylene (HFIB), perfluoroalkyl ethylenes of formula CH₂=CH-R_{f1}, wherein R_{f1} is a C₁-C₆ perfluoroalkyl group;
      (c) C₂-C₈ chloro- and/or bromo-containing fluoroolefins such as chlorotrifluoroethylene (CTFE);
      (d) perfluoroalkylvinylethers (PAVE) of formula CF₂=CFOR_{f1}, wherein R_{f1} is a C₁-C₆ perfluoroalkyl group, such as CF₃ (PMVE), C₂F₅ or C₃F₇;
      (e) perfluorooxyalkylvinylethers of formula CF₂=CFOX₀, wherein X₀ is a a C₁-C₁₂ perfluorooxyalkyl group comprising one or more than one ethereal oxygen atom, including notably perfluoromethoxyalkylvinylethers of formula CF₂=CFOCF₂OR_{f2}, with R_{f2} being a C₁-C₃ perfluoro(oxy)alkyl group, such as -CF₂CF₃, -CF₂CF₂-O-CF₃ and -CF₃; and
      (f) (per)fluorodioxoles of formula: 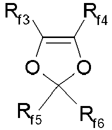 wherein each of R_{f3}, R_{f4}, R_{f5} and R_{f6}, equal to or different from each other, is independently a fluorine atom, a C₁-C₆ perfluoro(oxy)alkyl group, optionally comprising one or more oxygen atoms, such as -CF₃, -C₂F₅, -C ₃F₇, -OCF₃ or -OCF₂CF₂OCF₃; and
   (2) tetrafluoroethylene (TFE)-based elastomeric blocks (A_{TFE}) consisting of a sequence of recurring units, said sequence comprising recurring units derived from TFE and recurring units derived from at least one fluorinated monomer different from TFE, said fluorinated monomer being typically selected from the group consisting of those of classes (b), (c), (d), (e) as defined above;
- at least one thermoplastic block (B) consisting of a sequence of recurring units derived from at least one fluorinated monomer.

Any of block(s) (A_{VDF}) and (A_{TFE}) may further comprise recurring units derived from at least one hydrogenated monomer, which may be selected from the group consisting of C₂-C₈ non-fluorinated olefins such as ethylene, propylene or isobutylene.

Should the elastomeric block (A) be a block (A_{VDF}), as above detailed, said block (A_{VDF}) typically consists of a sequence of recurring units comprising, preferably consisting of:
- from 45% to 90% by moles of recurring units derived from vinylidene fluoride (VDF),
- from 5% to 50% by moles of recurring units derived from at least one fluorinated monomer different from VDF, and
- optionally, up to 30% by moles of recurring units derived from at least one hydrogenated monomer,
with respect to the total moles of recurring units of the sequence of block (A_{VDF}).

The elastomeric block (A) may further comprise recurring units derived from at least one bis-olefin [bis-olefin (OF)] of formula:

R_{A}R_{B}=CR_{C}-T-CR_{D}=R_{E}R_{F}

wherein R_{A}, R_{B}, R_{C}, R_{D}, R_{E} and R_{F}, equal to or different from each other, are selected from the group consisting of H, F, CI, C₁-C₅ alkyl groups and C₁-C₅ (per)fluoroalkyl groups, and T is a linear or branched C₁-C₁₈ alkylene or cycloalkylene group, optionally comprising one or more than one ethereal oxygen atom, preferably at least partially fluorinated, or a (per)fluoropolyoxyalkylene group.

The bis-olefin (OF) is preferably selected from the group consisting of those of any of formulae (OF-1), (OF-2) and (OF-3): 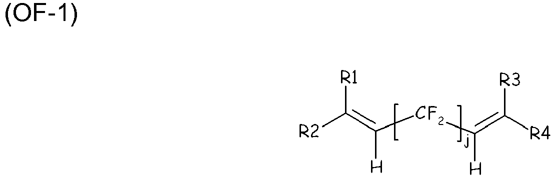 wherein j is an integer comprised between 2 and 10, preferably between 4 and 8, and R1, R2, R3 and R4, equal to or different from each other, are selected from the group consisting of H, F, C₁-C₅ alkyl groups and C₁-C₅ (per)fluoroalkyl groups; 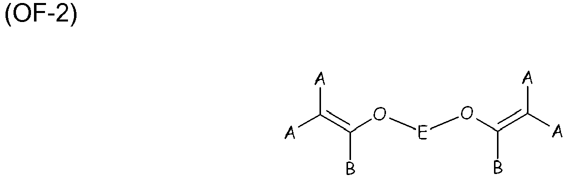 wherein each of A, equal to or different from each other and at each occurrence, is independently selected from the group consisting of H, F and CI; each of B, equal to or different from each other and at each occurrence, is independently selected from the group consisting of H, F, CI and OR_{B}, wherein R_{B} is a branched or straight chain alkyl group which may be partially, substantially or completely fluorinated or chlorinated, E is a divalent group having 2 to 10 carbon atoms, optionally fluorinated, which may be inserted with ether linkages; preferably E is a -(CF₂)ₘ- group, wherein m is an integer comprised between 3 and 5; a preferred bis-olefin of (OF-2) type is F₂C=CF-O-(CF₂)₅-O-CF=CF₂; 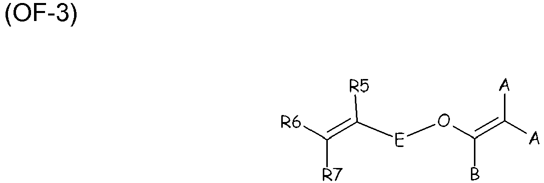 wherein E, A and B have the same meaning as defined above, R5, R6 and R7, equal to or different from each other, are selected from the group consisting of H, F, C₁-C₅ alkyl groups and C₁-C₅ (per)fluoroalkyl groups.

Should the block (A) consist of a recurring units sequence further comprising recurring units derived from at least one bis-olefin (OF), said sequence typically comprises recurring units derived from the said at least one bis-olefin (OF) in an amount comprised between 0.01% and 1.0% by moles, preferably between 0.03% and 0.5% by moles, more preferably between 0.05% and 0.2% by moles, based on the total moles of recurring units of block (A).

Block (B) may consist of a sequence of recurring units, said sequence comprising:
- recurring units derived from one or more than one fluoromonomer, preferably selected from the group consisting of:
   (a) C₂-C₈ perfluoroolefins such as tetrafluoroethylene (TFE), hexafluoropropylene (HFP);
   (b) hydrogen-containing C₂-C₈ fluoroolefins, such as vinylidene fluoride (VDF), vinyl fluoride, trifluoroethylene (TrFE), hexafluoroisobutylene (HFIB), perfluoroalkyl ethylenes of formula CH₂=CH-R_{f1}, wherein R_{f1} is a C₁-C₆ perfluoroalkyl group;
   (c) C₂-C₈ chloro- and/or bromo-containing fluoroolefins such as chlorotrifluoroethylene (CTFE);
   (d) perfluoroalkylvinylethers (PAVE) of formula CF₂=CFOR_{f1}, wherein R_{f1} is a C₁-C₆ perfluoroalkyl group, such as CF₃ (PMVE), C₂F₅ or C₃F₇;
   (e) perfluorooxyalkylvinylethers of formula CF₂=CFOX₀, wherein X₀ is a a C₁-C₁₂ perfluorooxyalkyl group comprising one or more than one ethereal oxygen atom, including notably perfluoromethoxyalkylvinylethers of formula CF₂=CFOCF₂OR_{f2}, with R_{f2} being a C₁-C₃ perfluoro(oxy)alkyl group, such as -CF₂CF₃, -CF₂CF₂-O-CF₃ and -CF₃; and
   (f) (per)fluorodioxoles of formula: 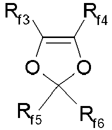 wherein each of R_{f3}, R_{f4}, R_{f5} and R_{f6}, equal to or different from each other, is independently a fluorine atom, a C₁-C₆ perfluoro(oxy)alkyl group, optionally comprising one or more oxygen atoms, such as -CF₃, -C₂F₅, -C ₃F₇, -OCF₃ or -OCF₂CF₂OCF₃; and
- optionally, recurring units derived from one or more than one hydrogenated monomer, as above detailed, including notably ethylene, propylene, (meth)acrylic monomers, styrenic monomers.

More specifically, block (B) may be selected from the group consisting of:
- sequence of recurring units derived from vinylidene fluoride and optionally from one or more than one additional fluorinated monomer different from VDF, e.g. HFP, TFE or CTFE, and optionally from a hydrogenated monomer, as above detailed, e.g. a (meth)acrylic monomer, whereas the amount of recurring units derived from VDF is of 80 to 100 % moles, based on the total moles of recurring units of block (B);
- sequences of recurring units derived from tetrafluoroethylene, and optionally from an additional perfluorinated monomer different from TFE, whereas the amount of recurring units derived from TFE is of 75 to 100 % moles, based on the total moles of recurring units of block (B);
- sequences of recurring units derived from ethylene and recurring units derived from CTFE and/or TFE, possibly in combination with an additional monomer.

According to certain embodiments, the polymer (F-TPE) is a perfluorinated thermoplastic elastomer [polymer (pF-TPE)] comprising:
- at least one elastomeric block (A) consisting of a sequence of recurring units derived from tetrafluoroethylene (TFE) and recurring units derived from at least one perfluorinated monomer other than TFE, and possibly of a minor amount of recurring units derived from at least one bis-olefin [bis-olefin (OF)], as above detailed, wherein the molar percentage of recurring units derived from TFE in said block (A) is comprised between 40 and 82 % moles, and
   wherein said block (A) possesses a glass transition temperature of less than 25°C, and
- at least one thermoplastic block (B) consisting of a sequence of recurring units derived from tetrafluoroethylene (TFE) and recurring units derived from at least one perfluorinated monomer other than TFE,
wherein the molar percentage of recurring units derived from TFE in said block (B) is comprised between 85 and 99.5 % moles, and wherein the crystallinity of said block (B) and its weight fraction in the polymer (pF-TPE) are such to provide for a heat of fusion of the polymer (pF-TPE) of at least 2.5 J/g, when determined according to ASTM D3418.

As said, both block (A) and block (B) of polymer (pF-TPE) consist of sequences of recurring units derived from TFE and recurring units derived from at least one perfluorinated monomer other than TFE. Recurring units derived from one or more than one perfluorinated monomer other than TFE may be present in each of block (A) and block (B). The said perfluorinated monomer(s) other than TFE may be the same in block (A) and block (B) recurring units, or may differ. It is nevertheless generally preferred for block (A) and block (B) to consist of sequences of recurring units derived from TFE and recurring units derived from same perfluorinated monomer(s) other than TFE.

The expression "perfluorinated", as used herein for characterizing the monomer other than TFE used in block (A) and block (B) is hereby used according to its usual meaning, so as to mean that in said monomer is free from hydrogen atoms and comprises fluorine atoms to saturate valencies.

The said perfluorinated monomer other than TFE is advantageously selected from the group consisting of:
(a) C₃-C₈ perfluoroolefins, preferably selected from the group consisting of hexafluoropropylene (HFP) and perfluoroisobutylene (PFIB);
(b) perfluoroalkylvinylethers (PAVE) of formula CF₂=CFOR_{f1}, wherein R_{f1} is a C₁-C₆ perfluoroalkyl group, such as CF₃ (PMVE), C₂F₅ or C₃F₇;
(c) perfluorooxyalkylvinylethers of formula CF₂=CFOX₀, wherein X₀ is a a C₁-C₁₂ perfluorooxyalkyl group comprising one or more than one ethereal oxygen atom, including notably perfluoromethoxyalkylvinylethers of formula CF₂=CFOCF₂OR_{f2}, with R_{f2} being a C₁-C₃ perfluoro(oxy)alkyl group, such as -CF₂CF₃, -CF₂CF₂-O-CF₃ and -CF₃; and
(d) (per)fluorodioxoles of formula: 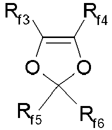 wherein each of R_{f3}, R_{f4}, R_{f5} and R_{f6}, equal to or different from each other, is independently a fluorine atom, a C₁-C₆ perfluoro(oxy)alkyl group, optionally comprising one or more oxygen atoms, such as -CF₃, -C₂F₅, -C ₃F₇, -OCF₃ or -OCF₂CF₂OCF₃.

Good results have been obtained for embodiments wherein block (A) consisted of a sequence of recurring units derived from TFE and recurring units derived from one or more than one PAVE, as above detailed, and possibly of a minor amount of recurring units derived from at least one bis-olefin (OF),
and/or wherein block (B) consisted of a sequence of recurring units derived from TFE and recurring units derived from one or more than one PAVE.

The expression "minor amount" when used hereunder for indicating the amount of recurring units derived from a bis-olefin in a block (A) of polymer (pF-TPE) is intended to denote an amount which is one order of magnitude less (e.g. at least 50 times less) than the amount of recurring units derived from the other monomers, i.e. TFE and the perfluorinated monomer other than TFE, so as not to significantly affect the typical thermal stability and chemical resistance performances due to these latter units.

Should the elastomeric block (A) of polymer (pF-TPE) further comprise recurring units derived from at least one bis-olefin (OF), said block (A) typically further comprises recurring units derived from at least one bis-olefin (OF) in an amount comprised between 0.01% and 1.0% by moles, preferably between 0.03% and 0.5% by moles, more preferably between 0.05% and 0.2% by moles, based on the total moles of recurring units constituting said elastomeric block (A).

The weight ratio between blocks (A) and blocks (B) in the fluorinated thermoplastic elastomer is typically comprised between 95:5 and 10:90.

According to certain preferred embodiments, the polymers (F-TPE) comprise a major amount of blocks (A); according to these embodiment's, the polymer (F-TPE) used in the method of the present invention is characterized by a weight ratio between blocks (A) and blocks (B) of 95:5 to 65:35, preferably 90:10 to 70:30.

The polymers (F-TPE) used in the method of the present invention may be manufactured by a manufacturing process comprising the following sequential steps:
(a) polymerizing at least one fluorinated monomer, and possibly at least one bis-olefin (OF), in the presence of a radical initiator and of an iodinated chain transfer agent, thereby providing a pre-polymer consisting of at least one block (A) containing one or more iodinated end groups; and
(b) polymerizing at least one fluorinated monomer, in the presence of a radical initiator and of the pre-polymer provided in step (a), thereby providing at least one block (B) grafted on said pre-polymer through reaction of the said iodinated end groups of the block (A).

The manufacturing process above detailed is preferably carried out in aqueous emulsion polymerization according to methods well known in the art, in the presence of a suitable radical initiator.

The radical initiator is typically selected from the group consisting of:
- inorganic peroxides such as, for instance, alkali metal or ammonium persulphates, perphosphates, perborates or percarbonates, optionally in combination with ferrous, cuprous or silver salts or other easily oxidable metals;
- organic peroxides such as, for instance, disuccinylperoxide, tertbutyl-hydroperoxide, and ditertbutylperoxide; and
- azo compounds (see, for instance, US 2515628 (E. I. DU PONT DE NEMOURS AND CO.) 7/18/1950 and US 2520338 (E. I. DU PONT DE NEMOURS AND CO.) 8/29/1950).

It is also possible to use organic or inorganic redox systems, such as persulphate ammonium/sodium sulphite, hydrogen peroxide/aminoiminomethansulphinic acid.

In step (a) of the manufacturing process as above detailed, one or more iodinated chain transfer agents are added to the reaction medium, typically of formula RₓIₙ, wherein Rₓ is a C₁-C₁₆, preferably a C₁-C₈ (per)fluoroalkyl or a (per)fluorochloroalkyl group, and n is 1 or 2. It is also possible to use as chain transfer agents alkali or alkaline-earth metal iodides, as described in US 5173553 (AUSIMONT S.P.A.) 12/22/1992 . The amount of the chain transfer agent to be added is established depending on the molecular weight which is intended to be obtained and on the effectiveness of the chain transfer agent itself.

In any of steps (a) and (b) of the manufacturing process as above detailed, one or more surfactants may be used, preferably fluorinated surfactants of formula:

R_{y}-X⁻M⁺

wherein R_{y} is a C₅-C₁₆ (per)fluoroalkyl or a (per)fluoropolyoxyalkyl group, X⁻ is -COO⁻ or -SO₃⁻, and M⁺ is selected from the group consisting of H⁺, NH₄⁺, and an alkali metal ion.

Among the most commonly used surfactants, mention can be made of (per)fluoropolyoxyalkylenes terminated with one or more carboxyl groups.

In the manufacturing process, when step (a) is terminated, the reaction is generally discontinued, for instance by cooling, and the residual monomers are removed, for instance by heating the emulsion under stirring. The second polymerization step (b) is then advantageously carried out, feeding the new monomer(s) mixture and adding fresh radical initiator. If necessary, under step (b) of the process for the manufacture of the polymer (F-TPE), one or more further chain transfer agents may be added, which can be selected from the same iodinated chain transfer agents as defined above or from chain transfer agents known in the art for use in the manufacture of fluoropolymers such as, for instance, ketones, esters or aliphatic alcohols having from 3 to 10 carbon atoms, such as acetone, ethylacetate, diethylmalonate, diethylether and isopropyl alcohol; hydrocarbons, such as methane, ethane and butane; chloro(fluoro)carbons, optionally containing hydrogen atoms, such as chloroform and trichlorofluoromethane; bis(alkyl)carbonates wherein the alkyl group has from 1 to 5 carbon atoms, such as bis(ethyl) carbonate and bis(isobutyl) carbonate. When step (b) is completed, the polymer (F-TPE) is generally isolated from the emulsion according to conventional methods, such as by coagulation by addition of electrolytes or by cooling.

Alternatively, the polymerization reaction can be carried out in mass or in suspension, in an organic liquid where a suitable radical initiator is present, according to known techniques. The polymerization temperature and pressure can vary within wide ranges depending on the type of monomers used and based on the other reaction conditions. Step (a) and/or step (b) of process for the manufacture of the polymer (F-TPE) is typically carried out at a temperature of from -20°C to 150°C; and/or typically under pressures up to 10 MPa.

The manufacturing process as above detailed is preferably carried out in aqueous emulsion polymerization in the presence of a microemulsion of perfluoropolyoxyalkylenes, as described in US 4864006 (AUSIMONT S.P.A.) 9/5/1989 , or in the presence of a microemulsion of fluoropolyoxyalkylenes having hydrogenated end groups and/or hydrogenated recurring units, as described in EP 625526 A (AUSIMONT S.P.A.) 11/23/1994 .

### The part material [composition (C)]

Within the frame of the present invention, the expression "part material" (otherwise referred to as "composition (C)"), as used in connection with the method of the present invention is understood to designate the composition of matter intended to be the constituent material of the three-dimensional object obtained from the said method.

As said the part material (otherwise referred to as "composition (C)") comprises at least one polymer (F-TPE) as above detailed. One or more than one polymer (F-TPE) may be used in the part material.

The part material may comprise the polymer (F-TPE) as above detailed in combination with other materials/ingredients, or may essentially consist of the said polymer (F-TPE), being understood that minor amounts (e.g. < 1% wt on total part material) of components other than the polymer (F-TPE) may be present, without these components substantially affecting the performances and the properties of the polymer (F-TPE).

Composition (C) may hence comprise one or more than one additional polymer materials having thermoplastic behaviour, such as notably one or more than one fluoropolymer.

Further, the composition (C) may comprise one or more than one ingredients, such as those selected from the group consisting of thermal stabilizers, fillers, colouring compounds, plasticizers, curing systems, acid acceptors.

Generally, to the aim of fabricating a coloured three-dimensional object, the composition (C) will comprise one or more than one colouring compound, whose choice is not particularly limited. As used herein, the term "colouring compound" is intended to denote a compound that changes the colour of reflected or transmitted light as the result of wavelength-selective absorption of the electromagnetic radiation.

The colouring compound maybe typically selected from the group consisting of organic colouring compounds and inorganic colouring compounds. Mixtures of one or more organic colouring compounds and one or more inorganic colouring compounds may be used in the composition (C) as above detailed. Otherwise, organic colouring compounds or inorganic colouring compounds may be separately used.

The colouring compound may be a luminescent colouring compound [compound (L)] or a non-luminescent colouring compound [compound (N-L)].

For the purpose of the present invention, the term "luminescent colouring compound [compound (L)]" is intended to denote either a fluorescent colouring compound [compound (L-F)] or a phosphorescent colouring compound [compound (L-P)].

The terms "luminescent", "fluorescent" and "phosphorescent" are used in the present invention according to their usual meanings.

The compound (L) is usually able to re-emit the absorbed electromagnetic radiation from an excited state to a ground state. In particular, the compound (L-F) usually absorbs electromagnetic radiation in the ultraviolet (UV) region and re-emit it in the visible region of the electromagnetic spectrum.

For the purpose of the present invention, the term "non-luminescent colouring compound [compound (N-L)]" is intended to denote a non-luminescent colouring compound which selectively absorbs electromagnetic radiation in the visible region of the electromagnetic spectrum.

According to an embodiment of the present invention, mixtures of one or more compounds (L) and one or more compounds (N-L) may be used in the composition (C) of the invention.

Non-limiting examples of suitable inorganic compounds (N-L) include inorganic pigments such as metal salts and metal oxides, preferably selected from the group consisting of cadmium sulfide, zinc sulfide, cadmium selenite, lead chromate, zinc chromate, aluminosilicate sulfur complex, ferric oxide, ferric oxide molybdenate, chromium oxide, copper oxide, cobalt oxide, alumina, lead oxide, carbon black and mixtures thereof.

Non-limiting examples of suitable organic compounds (N-L) include, for instance, azo pigments and polycyclic aromatic pigments, said polycyclic aromatic pigments being preferably selected from those based on cyanine, phthalocyanine such as copper phthalocyanine, anthraquinone, quinacridone, perylene, perinone, thioindigo, dioxazine, isoindolinone, isoindoline, diketopyrrolopyrrole, triarylcarbonium and quinophthalone.

Non-limiting examples of suitable organic compounds (L-F) typically include polycyclic aromatic dyes such as those based on xanthene, thioxanthene, benzoxanthene, naphthalimide, coumarin, naphtholactam, hydrazam, azlactone, methine, oxazine and thiazine.

Non-limiting examples of suitable inorganic compounds (L-F) typically include inorganic compounds comprising at least one element selected from the group consisting of rare earth metals, Zn and Mn.

The composition (C) may comprise one or more than one filler; the filler may be at least one selected from the group consisting of calcium carbonate, mica, kaolin, talc, carbon black, carbon fibers, carbon nanotubes, magnesium carbonate, sulfates of barium, calcium sulfate, titanium, nano clay, carbon black, hydroxides of aluminium or ammonium or magnesium, zirconia, nanoscale titania, and combinations thereof. While silica and glass fibers are generally not preferred fillers, they may be used in the composition (C), when the components of the said composition (C) are not generating amounts of HF which may react with the said SiO₂ -based fillers.

### The method for manufacturing a three-dimensional object

As said, the method includes a step of printing layers of the part material, as above detailed.

Techniques for printing the said layers are not particularly limited, and may be selected notably from extrusion-based techniques, jetting, selective laser sintering, powder/binder jetting, electron-beam melting and stereolithography.

Depending upon the printing technique which is used, the part material may be provided under different morphology for being used for printing layers in the additive manufacturing system. For instance, the part material may be provided under the form of loose particles; it may be provided under the form of fluid-state thermally solidifiable material or meltable precursor thereof, or may be provided under the form of a thermosettable liquid solution.

The method may include printing layers of a support structure from a support material, and printing layers of the three-dimensional object from the said part material in coordination with the printing of the layers of the support structure, where at least a portion the printed layers of the support structure support the printed layers of the three-dimensional object, and then removing at least a portion of the support structure for obtaining the object (3D).

According to certain preferred embodiments, the printing technique is an extrusion-based technique. According to these embodiment's, the method of the invention comprises:
(i) a step of introducing a supply of the part material, as above detailed, in a fluid state into a flow passage of a discharge nozzle on a mechanically moveable dispensing head, said nozzle having a dispensing outlet at one end thereof in fluid-flow communication with said flow passage;
(ii) dispensing said part material from said dispensing outlet as a continuous, flowable fluid stream at a predetermined temperature above the temperature at which it solidifies onto a base member positioned in close proximity to said nozzle;
(iii) simultaneously with the dispensing of said part material onto said base member, mechanically generating relative movement of said base member and said dispensing head with respect to each other in a predetermined pattern to form a first layer of said material on said base member; and
(iv) displacing said dispensing head a predetermined layer thickness distance from said first layer, and
(v) after the portion of said first layer adjacent said nozzle has cooled and solidified, dispensing a second layer of said part material in a fluid state onto said first layer from said dispensing outlet while simultaneously moving said base member and said dispensing head relative to each other, whereby said second layer solidifies upon cooling and adheres to said first layer to form a three-dimensional article; and
(vi) forming multiple layers of said part material built up on top of the previously generated layer in multiple passes by repeated sequences of steps (i) to (v), as above detailed.

Although this not being required, the object (3D) generated in the method as above detailed, maybe submitted to a further step causing the polymer (F-TPE) to chemically crosslink.

This can be achieved through different techniques, including notably irradiation, e.g. with beta-radiation or gamma-radiation, thermal treatment, or any combination of the same.

To this aim, composition (C) may advantageously comprise suitable curing systems facilitating cross-linking of the polymer (F-TPE).

Should the disclosure of any patents, patent applications, and publications which are incorporated herein by reference conflict with the description of the present application to the extent that it may render a term unclear, the present description shall take precedence.

The invention will be now described in more detail with reference to the following examples whose purpose is merely illustrative and not limitative of the scope of the invention.

### Example 1

In a 22 litres reactor equipped with a mechanical stirrer operating at 400 rpm, 13.9 I of demineralized water and 139 ml of a microemulsion, previously obtained by mixing 29.2 ml of a perfluoropolyoxyalkylene having acidic end groups of formula: CF₂ClO(CF₂-CF(CF₃)O)ₙ(CF₂O)ₘCF ₂COOH, wherein n/m = 10, having average molecular weight of 600, 9.5 ml of a 30 % v/v NH₄OH aqueous solution, 81.8 ml of demineralised water and 18.5 ml of GALDEN® D02 perfluoropolyether of formula: C-F₋₃-O(CF₂CF(CF₃)O)ₙ(CF₂O)ₘCF₃ with n/m = 20, having average molecular weight of 450, were introduced.

Then 6.1 g of 1,4-diiodoperfluorobutane (C₄F₈I₂) as chain transfer agent were introduced, and the reactor was heated and maintained at a set-point temperature of 80°C; a mixture of tetrafluoroethylene (TFE) (38% moles) and perfluoromethylvinylether (MVE) (62% moles) was then added to reach a final pressure of 21 bar (2.1 MPa). 1.39 g of ammonium persulfate (APS) as initiator were then introduced. Pressure was maintained at set-point of 21 bar by continuous feeding of a gaseous mixture of TFE (60% moles) and MVE (40% moles) up to a total of 3000 g. Once 3000 g of monomer mixture were fed in the reactor, the reaction was discontinued by reducing the stirring to 50 rpm and cooling the reactor at room temperature. The stirrer was then stopped and the residual pressure was discharged, and the temperature brought to 75 °C. A mixture of tetrafluoroethylene (TFE) (81% moles) and perfluoromethylvinylether (MVE) (19% moles) was then added to reach a final pressure of 21 bar (2.1 MPa). As soon as the mechanical stirrer was set operating at 400 rpm, the reaction started with no need for additional initiator and the pressure was maintained at set-point of 21 bar by continuous feeding of a gaseous mixture of TFE (95% moles) and MVE (5% moles) up to a total of 750 g. Then the reactor was cooled, vented and the latex recovered. The latex was treated with nitric acid, the polymer was separated from the aqueous phase, washed with demineralized water, dried in a convection oven at 130°C for 16 hours and finally granulated in a twin-extruder. Material characterization data of so-obtained pellets are summarized in Table 1.

### Example 3

In a 7.5 liters reactor equipped with a mechanical stirrer operating at 72 rpm, 4.5 I of demineralized water and 22 ml of a microemulsion, previously obtained by mixing 4.8 ml of a perfluoropolyoxyalkylene having acidic end groups of formula CF₂ClO(CF₂-CF(CF₃)O)ₙ(CF₂O)ₘCF₂COOH, wherein n/m = 10, having an average molecular weight of 600, 3.1 ml of a 30% v/v NH₄OH aqueous solution, 11.0 ml of demineralized water and 3.0 ml of GALDEN® D02 perfluoropolyether of formula CF₃O(CF₂CF(CF₃)O)ₙ(CF₂ O)ₘCF₃, wherein n/m = 20, having an average molecular weight of 450, were introduced.

The reactor was heated and maintained at a set-point temperature of 85°C; a mixture of vinylidene fluoride (VDF) (78.5% moles) and hexafluoropropylene (HFP) (21.5% moles) was then added to reach a final pressure of 20 bar. Then, 8 g of 1,4-diiodoperfluorobutane (C₄F₈I₂) as chain transfer agent were introduced, and 1.25 g of ammonium persulfate (APS) as initiator were introduced. Pressure was maintained at a set-point of 20 bar by continuous feeding of a gaseous mixture of vinylidene fluoride (VDF) (78.5% by moles) and hexafluoropropylene (HFP) (21.5% by moles) up to a total of 2000 g. Moreover, 0.86 g of CH₂=CH-(CF₂)₆-CH=CH₂, fed in 20 equivalent portions each 5% increase in conversion, were introduced.

Once 2000 g of monomer mixture were fed to the reactor, the reaction was discontinued by cooling the reactor to room temperature. The residual pressure was then discharged and the temperature brought to 80°C. VDF was then fed into the autoclave up to a pressure of 20 bar, and 0.14 g of ammonium persulfate (APS) as initiator were introduced. Pressure was maintained at a set-point of 20 bar by continuous feeding of VDF up to a total of 500 g. Then, the reactor was cooled, vented and the latex recovered. The latex was treated with aluminum sulphate, separated from the aqueous phase, washed with demineralized water and dried in a convection oven at 90°C for 16 hours, and finally granulated in a twin-extruder. Material characterization data of so obtained pellets are summarized in Table 1 below.

### Characterization of materials produced in the examples

### Determination of thermal properties

Thermal properties have been determined by differential scanning calorimetry pursuant to ASTM D3418 standard.

Weight loss at a given temperature Tx was measured by heating the sample in a thermogravimetric analyser (Perkin Elmer TGA7) at a heating rate of 10°C/min under a 30 mL/min flux of air.

### Determination of rheological properties

Rheological tests have been performed according to ASTM D4440 standard, using an Anton Paar MCR502 rheogoniometer with parallel plates geometry (25 mm diameter; gap between 1 and 2 mm). Maximum strain amplitude has been set within linear viscoelastoc range of the specimen submitted to test via a preliminary automated strain sweep. Isothermal frequency sweep in the range 0.05 to 100 rad/sec at temperatures T* slightly exceeding melting point of the specimen submitted to test (Tₘ+10°C < T* < Tₘ+15°C) were performed, and complex viscosities values recorded.

**Table 2**

| | | **Ex. 1** | | **Ex. 2C(#)** | **Ex. 3** | | **Ex. 4C(*)** |
|---|---|---|---|---|---|---|---|
| **DSC data** | | | | | | | |
| T_{g} | [°C] | -1.5 | | n.a. | -21.5 | | n.a. |
| Tₘ | [°C] | 240 | | 255 | 162.5 | | 170 |
| ΔHₘ | [J/g] | 4.0 | | n.a. | 7.0 | | n.a. |

| Recurring units | | block (A) | block (B) | random | block (A) | block (B) | homo |
|---|---|---|---|---|---|---|---|
| fraction | [% wt] | 80 | 20 | n.a. | 90 | 10 | n.a. |
| VDF | [% mol] | - | - | - | 78.5 | 100 | 100 |
| HFP | [% mol] | - | - | - | 21.5 | - | - |
| TFE | [% mol] | 60 | 93 | 93 | - | - | - |
| MVE | [% mol] | 40 | 7 | 7 | - | - | - |

| | | | | | | | |
|---|---|---|---|---|---|---|---|
| (#) Commercially available HYFLON® MFA 940 (TFE: about 93 % moles; MVE: about 7% moles), having Tₘ = 255°C, as pellets; (*) Commercially available SOLEF® 1013 PVDF homopolymer, having Tₘ = 170°C, as pellets. | | | | | | | |

Rheological properties of polymer of Ex. 1 and Ex. 2C are summarized in the following table.

Rheological data have been obtained at a temperature slightly exceeding melting temperature of the polymer of Ex. 1 and Ex. 2C, respectively.

**Table 2**

| Complex viscosity (Pa x sec) | Ex. 1 | Ex. 2C |
|---|---|---|
| Tₘ (°C) | 240°C | 255°C |
| T* (°C) | 250°C | 270°C |
| T*-Tₘ(°C) | 10°C | 15°C |
| η*100 rad/sec | 506 | 598 |

The data comprised in Table above clearly show that compared to corresponding thermoplast of similar monomer composition, the present perfluorinated thermoplastic elastomer possesses lower complex viscosity at shear rates of about 100 rad/sec (which are those encountered, e.g., in the die of a fused filament forming device) at significantly lower processing temperature, so demonstrating advantageous processing behaviour.

Thermal stability of samples of Ex. 1 and Ex. 2C was determined through measuring weight loss by TGA at a temperature of 300°C: for both materials, the weight loss was found to be below 0.1 % wt, hence confirming that the two materials possess substantially the same thermal stability in the range of temperatures which is of interest for the hereby concerned field of use.

Same conclusion can be drawn considering data comprised in Table 3, herein below, comparing VDF-based thermoplastic elastomer and thermoplast.

**Table 3**

| Complex viscosity (Pa x sec) | Ex. 3 | Ex. 4C |
|---|---|---|
| Tₘ(°C) | 165°C | 170°C |
| T* (°C) | 200°C | 200°C |
| T*- Tₘ (°C) | 35°C | 30°C |
| η*100 rad/sec | 926 | 2996 |

## Claims

1. A method for manufacturing a three-dimensional object [object (3D)] using an additive manufacturing system, comprising:
- generating a digital representation of the three-dimensional object, and slicing the same into multiple horizontal layers, so as to generate printing instructions for each of the said horizontal layers;
- printing layers of the object (3D) from a part material [composition (C)] comprising at least one fluorinated thermoplastic elastomer [polymer (F-TPE)] comprising:
- at least one elastomeric block (A) consisting of a sequence of recurring units, said sequence comprising recurring units derived from at least one fluorinated monomer, said block (A) possessing a glass transition temperature of less than 25°C, as determined according to ASTM D3418: and
- at least one thermoplastic block (B) consisting of a sequence of recurring units, said sequence comprising recurring units derived from at least one fluorinated monomer,
wherein the crystallinity of said block (B) and its weight fraction in the polymer (F-TPE) are such to provide for a heat of fusion of the polymer (F-TPE) of at least 2.5 J/g, when determined according to ASTM D3418.

2. The method of Claim 1, wherein polymer (F-TPE) comprises, preferably consists of:
- at least one elastomeric block (A) selected from the group consisting of:
(1) vinylidene fluoride (VDF)-based elastomeric blocks (A_{VDF}) consisting of a sequence of recurring units, said sequence comprising recurring units derived from VDF and recurring units derived from at least one fluorinated monomer different from VDF, said fluorinated monomer different from VDF being typically selected from the group consisting of:
(a) C₂-C₈ perfluoroolefins such as tetrafluoroethylene (TFE), hexafluoropropylene (HFP);
(b) hydrogen-containing C₂-C₈ fluoroolefins different from VDF, such as vinyl fluoride, trifluoroethylene (TrFE), hexafluoroisobutylene (HFIB), perfluoroalkyl ethylenes of formula CH₂=CH-R_{f1}, wherein R_{f1} is a C₁-C₆ perfluoroalkyl group;
(c) C₂-C₈ chloro- and/or bromo-containing fluoroolefins such as chlorotrifluoroethylene (CTFE);
(d) perfluoroalkylvinylethers (PAVE) of formula CF₂=CFOR_{f1}, wherein R_{f1} is a C₁-C₆ perfluoroalkyl group, such as CF₃ (PMVE), C₂F₅ or C₃F₇;
(e) perfluorooxyalkylvinylethers of formula CF₂=CFOX₀, wherein X₀ is a a C₁ -C₁₂ perfluorooxyalkyl group comprising one or more than one ethereal oxygen atom, including notably perfluoromethoxyalkylvinylethers of formula CF₂ =CFOCF₂OR_{f2}, with R_{f2} being a C₁-C₃ perfluoro(oxy)alkyl group, such as -CF ₂CF₃, -CF₂CF₂-O-CF₃ and -CF₃; and
(f) (per)fluorodioxoles of formula: 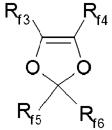 wherein each of R_{f3}, R_{f4}, R_{f5} and R_{f6}, equal to or different from each other, is independently a fluorine atom, a C₁-C₆ perfluoro(oxy)alkyl group, optionally comprising one or more oxygen atoms, such as -CF₃, -C₂F₅, -C₃F₇, -OCF₃ or -OCF₂CF₂OCF₃; and
(2) tetrafluoroethylene (TFE)-based elastomeric blocks (A_{TFE}) consisting of a sequence of recurring units, said sequence comprising recurring units derived from TFE and recurring units derived from at least one fluorinated monomer different from TFE, said fluorinated monomer being typically selected from the group consisting of those of classes (b), (c), (d), (e) as defined above;
- at least one thermoplastic block (B) consisting of a sequence of recurring units derived from at least one fluorinated monomer.

3. The method of Claim 2, wherein elastomeric block (A) further comprises recurring units derived from at least one bis-olefin [bis-olefin (OF)] of formula:
R_{A}R_{B}=CR_{C}-T-CR_{D}=R_{E}R_{F}
wherein R_{A}, R_{B}, R_{C}, R_{D}, R_{E} and R_{F}, equal to or different from each other, are selected from the group consisting of H, F, CI, C₁-C₅ alkyl groups and C₁-C₅ (per)fluoroalkyl groups, and T is a linear or branched C₁-C₁₈ alkylene or cycloalkylene group, optionally comprising one or more than one ethereal oxygen atom, preferably at least partially fluorinated, or a (per)fluoropolyoxyalkylene group, and wherein the bis-olefin (OF) is preferably selected from the group consisting of those of any of formulae (OF-1), (OF-2) and (OF-3): 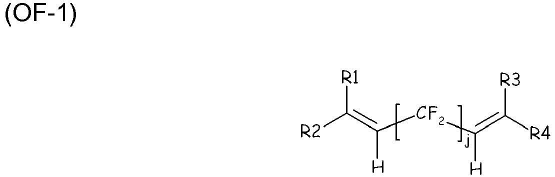 wherein j is an integer comprised between 2 and 10, preferably between 4 and 8, and R1, R2, R3 and R4, equal to or different from each other, are selected from the group consisting of H, F, C₁-C₅ alkyl groups and C₁-C₅ (per)fluoroalkyl groups; 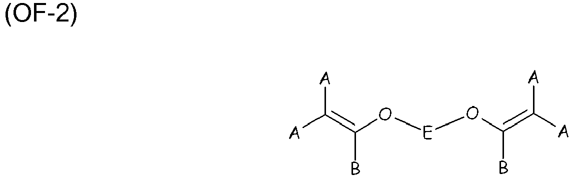 wherein each of A, equal to or different from each other and at each occurrence, is independently selected from the group consisting of H, F and CI; each of B, equal to or different from each other and at each occurrence, is independently selected from the group consisting of H, F, CI and OR_{B}, wherein R_{B} is a branched or straight chain alkyl group which may be partially, substantially or completely fluorinated or chlorinated, E is a divalent group having 2 to 10 carbon atoms, optionally fluorinated, which may be inserted with ether linkages; preferably E is a -(CF₂)ₘ- group, wherein m is an integer comprised between 3 and 5; a preferred bis-olefin of (OF-2) type is F₂ C=CF-O-(CF₂)₅-O-CF=CF₂; 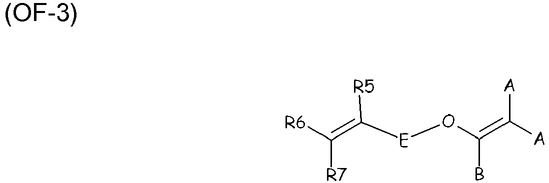 wherein E, A and B have the same meaning as defined above, R5, R6 and R7, equal to or different from each other, are selected from the group consisting of H, F, C₁-C₅ alkyl groups and C₁-C₅ (per)fluoroalkyl groups.

4. The method of anyone of the preceding claims, wherein block (B) consists of a sequence of recurring units, said sequence comprising:
- recurring units derived from one or more than one fluoromonomer, preferably selected from the group consisting of:
(a) C₂-C₈ perfluoroolefins such as tetrafluoroethylene (TFE), hexafluoropropylene (HFP);
(b) hydrogen-containing C₂-C₈ fluoroolefins, such as vinylidene fluoride (VDF), vinyl fluoride, trifluoroethylene (TrFE), hexafluoroisobutylene (HFIB), perfluoroalkyl ethylenes of formula CH₂=CH-R_{f1}, wherein R_{f1} is a C₁-C₆ perfluoroalkyl group;
(c) C₂-C₈ chloro- and/or bromo-containing fluoroolefins such as chlorotrifluoroethylene (CTFE);
(d) perfluoroalkylvinylethers (PAVE) of formula CF₂=CFOR_{f1}, wherein R_{f1} is a C₁-C₆ perfluoroalkyl group, such as CF₃ (PMVE), C₂F₅ or C₃F₇;
(e) perfluorooxyalkylvinylethers of formula CF₂=CFOX₀, wherein X₀ is a a C₁ -C₁₂ perfluorooxyalkyl group comprising one or more than one ethereal oxygen atom, including notably perfluoromethoxyalkylvinylethers of formula CF₂ =CFOCF₂OR_{f2}, with R_{f2} being a C₁-C₃ perfluoro(oxy)alkyl group, such as -CF ₂CF₃, -CF₂CF₂-O-CF₃ and -CF₃; and
(f) (per)fluorodioxoles of formula: 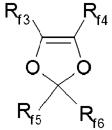 wherein each of R_{f3}, R_{f4}, R_{f5} and R_{f6}, equal to or different from each other, is independently a fluorine atom, a C₁-C₆ perfluoro(oxy)alkyl group, optionally comprising one or more oxygen atoms, such as -CF₃, -C₂F₅, -C₃F₇, -OCF₃ or -OCF₂CF₂OCF₃; and
- optionally, recurring units derived from one or more than one hydrogenated monomer, as above detailed, including notably ethylene, propylene, (meth)acrylic monomers, styrenic monomers;
and wherein block (B) is preferably selected from the group consisting of:
- sequence of recurring units derived from vinylidene fluoride and optionally from one or more than one additional fluorinated monomer different from VDF, e.g. HFP, TFE or CTFE, and optionally from a hydrogenated monomer, e.g. a (meth)acrylic monomer, whereas the amount of recurring units derived from VDF is of 80 to 100 % moles, based on the total moles of recurring units of block (B);
- sequences of recurring units derived from tetrafluoroethylene, and optionally from an additional perfluorinated monomer different from TFE, whereas the amount of recurring units derived from TFE is of 75 to 100 % moles, based on the total moles of recurring units of block (B);
- sequences of recurring units derived from ethylene and recurring units derived from CTFE and/or TFE, possibly in combination with an additional monomer.

5. The method of anyone of the preceding claims, wherein the weight ratio between blocks (A) and blocks (B) in the fluorinated thermoplastic elastomer is comprised between 95:5 and 10:90, and preferably in the range of 95:5 to 65:35, more preferably of 90:10 to 70:30.

6. The method of anyone of the preceding claims, wherein the part material comprises the polymer (F-TPE) as above detailed in combination with other materials/ingredients, or wherein the part material essentially consists of the said polymer (F-TPE), being understood that minor amounts (e.g. < 1% wt on total part material) of components other than the polymer (F-TPE) may be present, without these components substantially affecting the performances and the properties of the polymer (F-TPE).

7. The method of claim 5, wherein composition (C) comprises one or more than one additional polymer materials having thermoplastic behaviour, such as notably one or more than one fluoropolymer, and/or wherein the composition (C) comprises one or more than one ingredients, such as those selected from the group consisting of thermal stabilizers, fillers, colouring compounds, plasticizers, curing systems, acid acceptors.

8. The method of Claim 7, wherein the composition (C) comprises one or more than one colouring compound, selected from the group consisting of a luminescent colouring compound [compound (L)] or a non-luminescent colouring compound [compound (N-L)].

9. The method according to anyone of the preceding claims, wherein the method includes a step of printing layers of the part material, according to a technique selected from the group consisting of extrusion-based techniques, jetting, selective laser sintering, powder/binder jetting, electron-beam melting and stereolithography.

10. The method according to anyone of the preceding claims, wherein the method includes printing layers of a support structure from a support material, and printing layers of the three-dimensional object from the said part material in coordination with the printing of the layers of the support structure, where at least a portion the printed layers of the support structure support the printed layers of the three-dimensional object, and then removing at least a portion of the support structure for obtaining the object (3D).

11. The method according to anyone of the preceding claims, said method comprising:
(i) a step of introducing a supply of the part material, as above detailed, in a fluid state into a flow passage of a discharge nozzle on a mechanically moveable dispensing head, said nozzle having a dispensing outlet at one end thereof in fluid-flow communication with said flow passage;
(ii) dispensing said part material from said dispensing outlet as a continuous, flowable fluid stream at a predetermined temperature above the temperature at which it solidifies onto a base member positioned in close proximity to said nozzle;
(iii) simultaneously with the dispensing of said part material onto said base member, mechanically generating relative movement of said base member and said dispensing head with respect to each other in a predetermined pattern to form a first layer of said material on said base member; and
(iv) displacing said dispensing head a predetermined layer thickness distance from said first layer, and
(v) after the portion of said first layer adjacent said nozzle has cooled and solidified, dispensing a second layer of said part material in a fluid state onto said first layer from said dispensing outlet while simultaneously moving said base member and said dispensing head relative to each other, whereby said second layer solidifies upon cooling and adheres to said first layer to form a three-dimensional article; and
(vi) forming multiple layers of said part material built up on top of the previously generated layer in multiple passes by repeated sequences of steps (i) to (v), as above detailed.

12. The method according to anyone of the preceding claims, said method comprising a further step wherein the object (3D) is submitted to a further step causing the polymer (F-TPE) to chemically crosslink.

13. The method of claim 12, wherein composition (C) comprises curing systems facilitating cross-linking of the polymer (F-TPE).

## Patentansprüche

1. Verfahren zur Herstellung eines dreidimensionalen Gegenstands [Gegenstand (3D)] unter Verwendung eines additiven Fertigungssystems, umfassend:
- Erzeugen einer digitalen Darstellung des dreidimensionalen Gegenstands und Zerteilen davon in mehrere horizontale Schichten, um Druckanweisungen für jede der horizontalen Schichten zu erzeugen;
- Drucken von Schichten des Gegenstands (3D) aus einem Teilematerial [Zusammensetzung (C)], das wenigstens ein fluoriertes thermoplastisches Elastomer [Polymer (F-TPE)] umfasst, das umfasst:
- wenigstens einen elastomeren Block (A), der aus einer Folge von Wiederholungseinheiten besteht, wobei die Folge Wiederholungseinheiten umfasst, die von wenigstens einem fluorierten Monomer abgeleitet sind, wobei der Block (A) eine Glasübergangstemperatur von weniger als 25 °C, wie bestimmt gemäß ASTM D3418, aufweist, und
- wenigstens einen thermoplastischen Block (B), der aus einer Folge von Wiederholungseinheiten besteht, wobei die Folge Wiederholungseinheiten umfasst, die von wenigstens einem fluorierten Monomer abgeleitet sind, wobei die Kristallinität des Blocks (B) und sein Gewichtsanteil in dem Polymer (F-TPE) so sind, dass sie eine Schmelzwärme des Polymers (F-TPE) von wenigstens 2,5 J/g, wenn bestimmt gemäß ASTM D3418, bereitstellen.

2. Verfahren gemäß Anspruch 1, wobei das Polymer (F-TPE) umfasst, vorzugsweise daraus besteht:
- wenigstens einen elastomeren Block (A) ausgewählt aus der Gruppe bestehend aus:
(1) elastomeren Blöcken auf Vinylidenfluorid(VDF)-Basis (A_{VDF}) bestehend aus einer Folge von Wiederholungseinheiten, wobei die Folge Wiederholungseinheiten, die von VDF abgeleitet sind, und Wiederholungseinheiten, die von wenigstens einem von VDF verschiedenen fluorierten Monomer abgeleitet sind, umfasst, wobei das von VDF verschiedene fluorierte Monomer typischerweise ausgewählt ist aus der Gruppe bestehend aus:
(a) C₂-C₈-Perfluorolefinen, wie z. B. Tetrafluorethylen (TFE), Hexafluorpropylen (HFP);
(b) wasserstoffhaltigen C₂-C₈-Fluorolefinen, die von VDF verschieden sind, wie z. B. Vinylfluorid, Trifluorethylen (TrFE), Hexafluorisobutylen (HFIB), Perfluorethylene der Formel CH₂=CH-R_{f1}, wobei R_{f1} eine C₁-C₆-Perfluoralkylgruppe ist;
(c) chlor- und/oder bromhaltigen C₂-C₈-Fluorolefinen, wie z. B. Chlortrifluorethylen (CTFE);
(d) Perfluoralkylvinylethern (PAVE) der Formel CF₂=CFOR_{f1}, wobei R_{f1} eine C₁-C₆-Perfluoralkylgruppe, wie z. B. CF₃ (PMVE), C₂F₅ oder C₃F₇, ist;
(e) Perfluoroxyalkylvinylethern der Formel CF₂=CFOX₀, wobei X₀ eine C₁-C₁₂Perfluoroxyalkylgruppe ist, die ein oder mehr als ein etherisches Sauerstoffatom umfasst, einschließlich insbesondere Perfluormethoxyalkylvinylether der Formel CF₂=CFOCF₂OR_{f2}, wobei R_{f2} eine C₁-C₃- Perfluor (oxy) alkylgruppe, wie z. B. -CF₂CF₃, -CF₂CF₂-O-CF₃ und -CF₃, ist; und
(f) (Per)fluordioxolen der Formel: 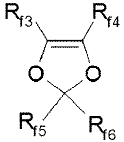 wobei jedes von R_{f3}, R_{f4}, R_{f5} und R_{f6} gleich oder voneinander verschieden unabhängig ein Fluoratom, eine C₁-C₆-Perfluor(oxy) alkylgruppe, die gegebenenfalls ein oder mehrere Sauerstoffatome umfasst, wie z. B. -CF₃, -C₂F₅, -C₃F₇, -OCF₃ oder -OCF₂CF₂OCF₃, ist; und
(2) elastomeren Blöcken auf Tetrafluorethylen(TFE)-Basis (A_{TFE}) bestehend aus einer Folge von Wiederholungseinheiten, wobei die Folge Wiederholungseinheiten, die von TFE abgeleitet sind, und Wiederholungseinheiten, die von wenigstens einem von TFE verschiedenen fluorierten Monomer abgeleitet sind, umfasst, wobei das fluorierte Monomer typischerweise ausgewählt ist aus der Gruppe bestehend aus jenen der wie vorstehend definierten Klassen (b), (c), (d), (e);
- wenigstens einen elastomeren Block (B) bestehend aus einer Folge von Wiederholungseinheiten, die von wenigstens einem fluorierten Monomer abgeleitet sind.

3. Verfahren gemäß Anspruch 2, wobei der elastomere Block (A) ferner Wiederholungseinheiten umfasst, die von wenigstens einem Bisolefin [Bisolefin (OF)] der Formel:
R_{A}R_{B}=CR_{C}-T-CR_{D}=R_{E}R_{F}
abgeleitet sind, wobei R_{A}, R_{B}, R_{C}, R_{B}, R_{E} und R_{F} gleich oder voneinander verschieden ausgewählt sind aus der Gruppe bestehend aus H, F, Cl, C₁-C₅-Alkylgruppen und C₁-C₅-(Per)fluoralkylgruppen, und T eine lineare oder verzweigte C₁-C₁₈-Alkylen- oder -Cycloalkylengruppe, gegebenenfalls umfassend ein oder mehr als ein etherisches Sauerstoffatom, vorzugsweise wenigstens teilweise fluoriert, oder eine (Per)fluorpolyoxyalkylengruppe ist, und wobei das Bisolefin (OF) vorzugsweise ausgewählt ist aus der Gruppe bestehend aus jenen mit einer der Formeln (OF-1), (OF-2) und (OF-3): 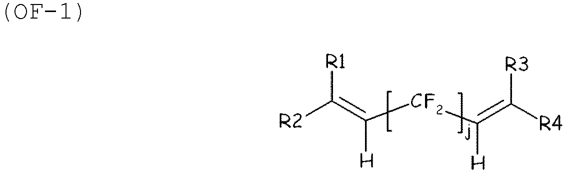 wobei j eine ganze Zahl in dem Bereich zwischen 2 und 10, vorzugsweise zwischen 4 und 8, ist und R1, R2, R3 und R4 gleich oder voneinander verschieden ausgewählt sind aus der Gruppe bestehend aus H, F, C₁-C₅-Alkylgruppen und C₁-C₅-(Per)fluoralkylgruppen; 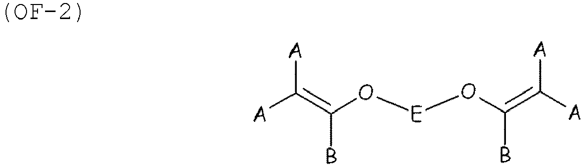 wobei jedes A gleich oder voneinander verschieden und bei jedem Auftreten unabhängig ausgewählt ist aus der Gruppe bestehend aus H, F und Cl; jedes B gleich oder voneinander verschieden und bei jedem Auftreten unabhängig ausgewählt ist aus der Gruppe bestehend aus H, F, Cl und OR_{B}, wobei R_{B} eine verzweigte oder geradkettige Alkylgruppe ist, die teilweise, erheblich oder vollständig fluoriert oder chloriert sein kann, E eine zweiwertige Gruppe mit 2 bis 10 Kohlenstoffatomen, gegebenenfalls fluoriert, in die Etherverknüpfungen eingefügt sein können, ist; wobei E vorzugsweise eine - (CF₂)ₘ-Gruppe ist, wobei m eine ganze Zahl in dem Bereich zwischen 3 und 5 ist; wobei ein bevorzugtes Bisolefin vom (OF-2)-TypF₂C=CF-O-(CF₂)₅-O-CF=CF₂ ist; 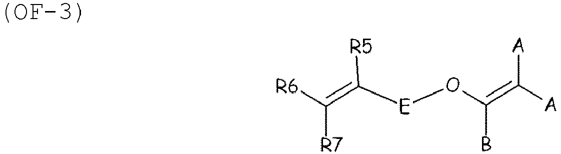 wobei E, A und B die gleiche Bedeutung wie vorstehend definiert haben, R5, R6 und R7 gleich oder voneinander verschieden ausgewählt sind aus der Gruppe bestehend aus H, F, C₁-C₅-Alkylgruppen und C₁-C₅-(Per)fluoralkylgruppen.

4. Verfahren gemäß einem der vorstehenden Ansprüche, wobei der Block (B) aus einer Folge von Wiederholungseinheiten besteht, wobei die Folge umfasst:
- Wiederholungseinheiten, die von einem oder mehr als einem Fluormonomer abgeleitet sind, vorzugsweise ausgewählt aus der Gruppe bestehend aus:
(a) C₂-C₈-Perfluorolefinen, wie z. B. Tetrafluorethylen (TFE), Hexafluorpropylen (HFP);
(b) wasserstoffhaltigen C₂-C₈-Fluorolefinen, wie z. B. Vinylidenfluorid (VDF), Vinylfluorid, Trifluorethylen (TrFE), Hexafluorisobutylen (HFIB), Perfluorethylene der Formel CH₂=CH-R_{f1}, wobei R_{f1} eine C₁-C₆-Perfluoralkylgruppe ist;
(c) chlor- und/oder bromhaltigen C₂-C₈-Fluorolefinen, wie z. B. Chlortrifluorethylen (CTFE);
(d) Perfluoralkylvinylethern (PAVE) der Formel CF₂=CFOR_{f1}, wobei R_{f1} eine C₁-C₆-Perfluoralkylgruppe, wie z. B. CF₃ (PMVE), C₂F₅ oder C₃F₇, ist;
(e) Perfluoroxyalkylvinylethern der Formel CF₂=CFOX₀, wobei X₀ eine C₁-C₁₂-Perfluoroxyalkylgruppe ist, die ein oder mehr als ein etherisches Sauerstoffatom umfasst, einschließlich insbesondere Perfluormethoxyalkylvinylether der Formel CF₂=CFOCF₂OR_{f2}, wobei R_{f2} eine C₁-C₃-Perfluor (oxy) alkylgruppe, wie z. B. -CF₂CF₃, -CF₂CF₂-O-CF₃ und -CF₃, ist; und
(f) (Per)fluordioxolen der Formel: 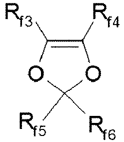 wobei jedes von R_{f3}, R_{f4}, R_{f5} und R_{f6} gleich oder voneinander verschieden unabhängig ein Fluoratom, eine C₁-C₆-Perfluor(oxy) alkylgruppe, die gegebenenfalls ein oder mehrere Sauerstoffatome umfasst, wie z. B. -CF₃, -C₂F₅, -C₃F₇, -OCF₃ oder -OCF₂CF₂OCF₃, ist; und
- gegebenenfalls Wiederholungseinheiten, die von einem oder mehr als einem wie vorstehend beschriebenen hydrierten Monomer abgeleitet sind, insbesondere einschließlich Ethylen, Propylen, (Meth)acrylmonomeren, Styrolmonomeren;
und wobei der Block (B) vorzugsweise ausgewählt ist aus der Gruppe bestehend aus:
- Folgen von Wiederholungseinheiten, die von Vinylidenfluorid, und gegebenenfalls von einem oder mehr als einem weiteren fluorierten Monomer, das von VDF verschieden ist, z. B. HFP, TFE oder CTFE, und gegebenenfalls von einem hydrierten Monomer, z. B. einem (Meth)acrylmonomer, abgeleitet sind, wobei die Menge an von VDF abgeleiteten Wiederholungseinheiten 80 bis 100 mol-%, bezogen auf die Gesamtmolzahl der Wiederholungseinheiten von Block (B), beträgt;
- Folgen von Wiederholungseinheiten, die von Tetrafluorethylen, und gegebenenfalls von einem weiteren perfluorierten Monomer, das von TFE verschieden ist, abgeleitet sind, wobei die Menge an von TFE abgeleiteten Wiederholungseinheiten 75 bis 100 mol-%, bezogen auf die Gesamtmolzahl der Wiederholungseinheiten von Block (B), beträgt;
- Folgen von Wiederholungseinheiten, die von Ethylen abgeleitet sind, und Wiederholungseinheiten, die von CTFE und/oder TFE abgeleitet sind, gegebenenfalls in Kombination mit einem zusätzlichen Monomer.

5. Verfahren gemäß einem der vorstehenden Ansprüche, wobei das Gewichtsverhältnis zwischen den Blöcken (A) und den Blöcken (B) in dem fluorierten thermoplastischen Elastomer in dem Bereich zwischen 95:5 und 10:90, vorzugsweise in dem Bereich von 95:5 bis 65:35, bevorzugter von 90:10 bis 70:30, liegt.

6. Verfahren gemäß einem der vorstehenden Ansprüche, wobei das Teilematerial das wie vorstehend beschriebene Polymer (F-TPE) in Kombination mit anderen Materialien/Bestandteilen umfasst, oder wobei das Teilematerial im Wesentlichen aus dem Polymer (F-TPE) besteht, wobei zu beachten ist, dass geringe Mengen (z. B. < 1 Gew.-% bezogen auf das gesamte Teilematerial) an Komponenten, die von dem Polymer (F-TPE) verschieden sind, vorhanden sein können, ohne dass diese Komponenten die Leistungsfähigkeit und die Eigenschaften des Polymers (F-TPE) wesentlich beeinflussen.

7. Verfahren gemäß Anspruch 5, wobei die Zusammensetzung (C) ein oder mehr als ein zusätzliches Polymermaterial mit thermoplastischem Verhalten umfasst, wie z. B. insbesondere ein oder mehr als ein Fluorpolymer, und/oder wobei die Zusammensetzung (C) einen oder mehr als einen Bestandteil, wie z. B. jene ausgewählt aus der Gruppe bestehend aus Wärmestabilisatoren, Füllstoffen, färbenden Verbindungen, Weichmachern, Härtungssystemen, Säureakzeptoren, umfasst.

8. Verfahren gemäß Anspruch 7, wobei die Zusammensetzung (C) eine oder mehr als eine färbende Verbindung ausgewählt aus der Gruppe bestehend aus einer lumineszenten färbenden Verbindung [Verbindung (L)] und einer nichtlumineszenten färbenden Verbindung [Verbindung (N-L)] umfasst.

9. Verfahren gemäß einem der vorstehenden Ansprüche, wobei das Verfahren einen Schritt des Druckens von Schichten des Teilematerials durch ein Verfahren ausgewählt aus der Gruppe bestehend aus Verfahren auf Extrusionsbasis, Spritzen, selektivem Lasersintern, Pulver/Bindemittel-Spritzen, Elektronenstrahlschmelzen und Stereolithographie umfasst.

10. Verfahren gemäß einem der vorstehenden Ansprüche, wobei das Verfahren Drucken von Schichten einer Trägerstruktur aus einem Trägermaterial und Drucken von Schichten des dreidimensionalen Gegenstands aus dem Teilematerial in Koordination mit dem Drucken der Schichten der Trägerstruktur, wobei wenigstens ein Teil der gedruckten Schichten der Trägerstruktur die gedruckten Schichten des dreidimensionalen Gegenstands trägt, und dann Entfernen wenigstens eines Teils der Trägerstruktur, um den Gegenstand (3D) zu erhalten, umfasst.

11. Verfahren gemäß einem der vorstehenden Ansprüche, wobei das Verfahren umfasst:
(i) einen Schritt des Einführens einer Zufuhr des wie vorstehend beschriebenen Teilematerials in einem fluiden Zustand in einen Strömungskanal einer Ausgabedüse an einem mechanisch beweglichen Ausgabekopf, wobei die Düse einen Ausgabeauslass an einem Ende davon in Fluidflussverbindung mit dem Strömungskanal aufweist;
(ii) Ausgeben des Teilematerials aus dem Ausgabeauslass als kontinuierlichen fließfähigen Fluidstrom bei einer vorbestimmten Temperatur über der Temperatur, bei dem es erstarrt, auf ein Basiselement, das in enger Nähe zu der Düse angeordnet ist;
(iii) gleichzeitig mit dem Ausgeben des Teilematerials auf das Basiselement mechanisches Erzeugen einer relativen Bewegung des Basiselements und des Ausgabekopfs zueinander in einem vorbestimmten Muster, um eine erste Schicht des Materials auf dem Basiselement zu bilden; und
(iv) Verschieben des Ausgabekopfs um einen vorbestimmten Schichtdickenabstand von der ersten Schicht; und
(v) nachdem der Teil der ersten Schicht nahe der Düse abgekühlt und erstarrt ist, Ausgeben einer zweiten Schicht des Teilematerials in einem fluiden Zustand auf die erste Schicht aus dem Ausgabeauslass, während gleichzeitig das Basiselement und der Ausgabekopf relativ zueinander bewegt werden, wobei die zweite Schicht bei Abkühlen erstarrt und an der ersten Schicht haftet, um einen dreidimensionalen Gegenstand zu bilden; und
(vi) in mehreren Durchgängen wiederholter Abfolgen der vorstehend beschriebenen Schritte (i) bis (v) Bilden mehrerer Schichten des Teilematerials, die auf der zuvor erzeugten Schicht gebildet werden.

12. Verfahren gemäß einem der vorstehenden Ansprüche, wobei das Verfahren einen weiteren Schritt umfasst, bei dem der Gegenstand (3D) einem weiteren Schritt unterworfen wird, der bewirkt, dass das Polymer (F-TPE) chemisch vernetzt.

13. Verfahren gemäß Anspruch 12, wobei die Zusammensetzung (C) Härtungssysteme umfasst, die Vernetzen des Polymers (F-TPE) ermöglichen.

## Revendications

1. Procédé pour la fabrication d'un objet tridimensionnel [objet (3D)] à l'aide d'un système de fabrication additive, comprenant :
- la génération d'une représentation numérique de l'objet tridimensionnel, et le découpage de celle-ci en de multiples couches horizontales, afin de générer des instructions d'impression pour chacune desdites couches horizontales ;
- l'impression de couches de l'objet (3D) à partir d'un matériau de pièce [composition (C)] comprenant au moins un élastomère thermoplastique fluoré [polymère (F-TPE)] comprenant :
- au moins un bloc élastomérique (A) constitué d'une séquence de motifs répétitifs, ladite séquence comprenant des motifs répétitifs issus d'au moins un monomère fluoré, ledit bloc (A) possédant une température de transition vitreuse inférieure à 25 °C, telle que déterminée selon la norme ASTM D3418 : et
- au moins un bloc thermoplastique (B) constitué d'une séquence de motifs répétitifs, ladite séquence comprenant des motifs répétitifs issus d'au moins un monomère fluoré,
la cristallinité dudit bloc (B) et sa fraction en poids dans le polymère (F-TPE) étant telles qu'elles fournissent une chaleur de fusion du polymère (F-TPE) d'au moins 2,5 J/g, lorsqu'elle est déterminée selon la norme ASTM D3418.

2. Procédé selon la revendication 1, le polymère (F-TPE) comprenant, préférablement étant constitué de :
- au moins un bloc élastomérique (A) choisi dans le groupe constitué par :
(1) des blocs élastomériques à base de fluorure de vinylidène (VDF) (A_{VDF}) constitués d'une séquence de motifs répétitifs, ladite séquence comprenant des motifs répétitifs issus du VDF et des motifs répétitifs issus d'au moins un monomère fluoré différent du VDF, ledit monomère fluoré différent du VDF étant typiquement choisi dans le groupe constitué par :
(a) des C₂₋₈-perfluorooléfines telles que le tétrafluoroéthylène (TFE), l'hexafluoropropylène (HFP) ;
(b) des C₂₋₈-fluorooléfines contenant de l'hydrogène différentes du VDF, telles que le fluorure de vinyle, le trifluoroéthylène (TrFE), l'hexafluoroisobutylène (HFIB), des perfluoroalkyléthylènes de formule CH₂=CH-R_{f1}, R_{f1} étant un groupe C₁₋₆-perfluoroalkyle ;
(c) des C₂₋₈-fluorooléfines contenant chloro et/ou bromo telles que le chlorotrifluoroéthylène (CTFE) ;
(d) des perfluoroalkylvinyléthers (PAVE) de formule CF₂=CFOR_{f1}, R_{f1} étant un groupe C₁₋₆-perfluoroalkyle, tels que CF₃ (PMVE), C₂F₅ ou C₃F₇ ;
(e) des perfluorooxyalkylvinyléthers de formule CF₂=CFOX₀, X₀ étant un groupe C₁₋₁₂-perfluorooxyalkyle comprenant un ou plus d'un atome d'oxygène d'éther, y compris notamment des perfluorométhoxyalkylvinyléthers de formule CF₂=CFOCF₂OR_{f2}, avec R_{f2} étant un groupe C₁₋₃-perfluoro(oxy) alkyle, tel que -CF₂CF₃, -CF₂CF₂-O-CF₃ et -CF₃ ; et
(f) des (per)fluorodioxoles de formule : 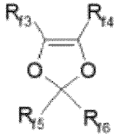 chacun parmi R_{f3}, R_{f4}, R_{f5} et R_{f6}, identiques ou différents les uns des autres étant indépendamment un atome de fluor, un groupe C₁₋₆-perfluoro(oxy)alkyle, éventuellement comprenant un ou plusieurs atomes d'oxygène, tels que -CF₃, -C₂F₅, -C₃F₇, - OCF₃, ou -OCF₂CF₂OCF₃ ; et
(2) des blocs élastomériques à base de tétrafluoroéthylène (TFE) (A_{TFE}) constitués d'une séquence de motifs répétitifs, ladite séquence comprenant des motifs répétitifs issus du TFE et des motifs répétitifs issus d'au moins un monomère fluoré différent du TFE, ledit monomère fluoré étant typiquement choisi dans le groupe constitué par ceux des classes (b), (c), (d), (e) telles que définies ci-dessus ;
- au moins un bloc thermoplastique (B) constitué d'une séquence de motifs répétitifs issus d'au moins un monomère fluoré.

3. Procédé selon la revendication 2, le bloc élastomérique (A) comprenant en outre des motifs répétitifs issus d'au moins une bis-oléfine [bis-oléfine (OF)] de formule :
**R_{A}R_{B}=CR_{C}-T-CR_{D}=R_{E}R_{F}**
R_{A}, R_{B}, R_{C}, R_{D}, R_{E} et R_{F}, identiques ou différents les uns des autres, étant choisis dans le groupe constitué par H, F, Cl, des groupes C₁₋₅-alkyle et des groupes C₁₋₅-(per)fluoroalkyle, et T étant un groupe C₁₋₁₈-alkylène linéaire ou ramifié ou cycloalkylène, éventuellement comprenant un ou plus d'un atome d'oxygène d'éther, préférablement au moins partiellement fluoré, ou un groupe (per)fluoropolyoxyalkylène, et la bis-oléfine (OF) étant préférablement choisie dans le groupe constitué par celles de l'une quelconque des formules (OF-1), (OF-2) et (OF-3) : 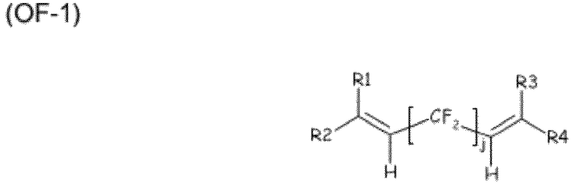 j étant un entier compris entre 2 et 10, préférablement entre 4 et 8, et R1, R2, R3 et R4, identiques ou différents les uns des autres, étant choisis dans le groupe constitué par H, F, des groupes C₁₋₅-alkyle et des groupes C₁₋₅-(per)fluoroalkyle ; 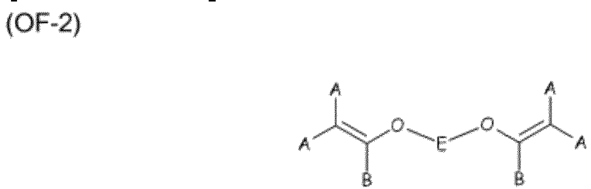 chacun parmi A, identiques ou différents les uns des autres et en chaque occurrence, étant indépendamment choisi dans le groupe constitué par H, F et Cl ;
chacun parmi B, identique ou différent l'un de l'autre et en chaque occurrence, étant indépendamment choisi dans le groupe constitué par H, F, Cl et OR_{B}, R_{B} étant un groupe alkyle à chaîne ramifiée ou droite qui peut être partiellement, sensiblement ou complètement fluorée ou chlorée, E étant un groupe divalent possédant 2 à 10 atomes de carbone, éventuellement fluoré, qui peut être inséré avec des liaisons éther ; préférablement E étant un groupe -(CF₂)ₘ-, m étant un entier compris entre 3 et 5 ; une bis-oléfine préférée de type (OF-2) étant F₂C=CF-O-(CF₂)₅-O-CF=CF₂ ; 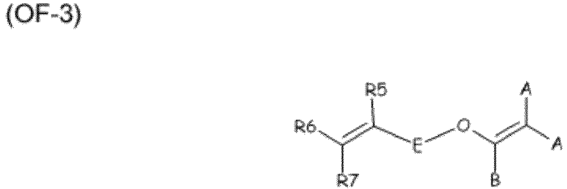 E, A et B possédant la même signification que définie ci-dessus, R5, R6 et R7, identiques ou différents les uns des autres, étant choisis dans le groupe constitué par H, F, des groupes C₁₋₅-alkyle et des groupes C₁₋₅-(per)fluoroalkyle.

4. Procédé selon l'une quelconque des revendications précédentes, le bloc (B) étant constitué d'une séquence de motifs répétitifs, ladite séquence comprenant :
- des motifs répétitifs issus d'un ou plus d'un fluoromonomère, préférablement choisis dans le groupe constitué par :
(a) des C₂₋₈-perfluorooléfines telles que le tétrafluoroéthylène (TFE), l'hexafluoropropylène (HFP) ;
(b) des C₂₋₈-fluorooléfines contenant de l'hydrogène, telles que le fluorure de vinylidène (VDF), le fluorure de vinyle, le trifluoroéthylène (TrFE), l'hexafluoroisobutylène (HFIB), des perfluoroalkyléthylènes de formule CH₂=CH-R_{f1}, R_{f1} étant un groupe C₁₋₆-perfluoroalkyle ;
(c) des C₂₋₈-fluorooléfines contenant chloro et/ou bromo telles que le chlorotrifluoroéthylène (CTFE) ;
(d) des perfluoroalkylvinyléthers (PAVE) de formule CF₂=CFOR_{f1}, R_{f1} étant un groupe C₁₋₆-perfluoroalkyle, tels que CF₃ (PMVE), C₂F₅ ou C₃F₇ ;
(e) des perfluorooxyalkylvinyléthers de formule CF₂=CFOX₀, X₀ étant un groupe C₁₋₁₂-perfluorooxyalkyle comprenant un ou plus d'un atome d'oxygène d'éther, y compris notamment des perfluorométhoxyalkylvinyléthers de formule CF₂=CFOCF₂OR_{f2}, avec R_{f2} étant un groupe C₁₋₃-perfluoro(oxy) alkyle, tel que -CF₂CF₃, -CF₂CF₂-O-CF₃ et -CF₃ ; et
(f) des (per)fluorodioxoles de formule : 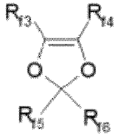 chacun parmi R_{f3}, R_{f4}, R_{f5} et R_{f6}, identiques ou différents les uns des autres étant indépendamment un atome de fluor, un groupe C₁₋₆-perfluoro(oxy)alkyle, éventuellement comprenant un ou plusieurs atomes d'oxygène, tels que -CF₃, -C₂F₅, -C₃F₇, - OCF₃, ou -OCF₂CF₂OCF₃ ; et
- éventuellement, des motifs répétitifs issus d'un ou plus d'un monomère hydrogéné, comme détaillé ci-dessus, y compris notamment l'éthylène, le propylène, des monomères (méth)acryliques, des monomères styréniques ;
et le bloc (B) étant préférablement choisi dans le groupe constitué par :
- une séquence de motifs répétitifs issus du fluorure de vinylidène et éventuellement d'un ou plus d'un monomère fluoré supplémentaire différent du VDF, par ex. HFP, TFE ou CTFE, et éventuellement d'un monomère hydrogéné, par ex. un monomère (méth)acrylique, la quantité de motifs répétitifs issus du VDF étant de 80 à 100 % en moles, sur la base du nombre total de moles de motifs répétitifs du bloc (B) ;
- des séquences de motifs répétitifs issus du tétrafluoroéthylène, et éventuellement d'un monomère perfluoré supplémentaire différent du TFE, la quantité de motifs répétitifs issus du TFE étant de 75 à 100 % en moles, sur la base du nombre total de moles de motifs répétitifs du bloc (B) ;
- des séquences de motifs répétitifs issus de l'éthylène et de motifs répétitifs issus du CTFE et/ou du TFE, possiblement en combinaison avec un monomère supplémentaire.

5. Procédé selon l'une quelconque des revendications précédentes, le rapport pondéral entre les blocs (A) et les blocs (B) dans l'élastomère thermoplastique fluoré étant compris entre 95:5 et 10:90, et préférablement dans la plage de 95:5 à 65:35, plus préférablement de 90:10 à 70:30.

6. Procédé selon l'une quelconque des revendications précédentes, le matériau de pièce comprenant le polymère (F-TPE) comme détaillé ci-dessus en combinaison d'autres matériaux/ingrédients, ou le matériau de pièce étant essentiellement constitué dudit polymère (F-TPE), étant entendu que des quantités faibles (par ex. < 1 % en poids du matériau de pièce total) de composants autres que le polymère (F-TPE) peuvent être présentes, sans que ces composants n'affectent sensiblement les performances et les propriétés du polymère (F-TPE) .

7. Procédé selon la revendication 5, la composition (C) comprenant un ou plus d'un matériau de polymère supplémentaire possédant un comportement thermoplastique, tel que notamment un ou plus d'un fluoropolymère, et/ou la composition (C) comprenant un ou plus d'un ingrédient, tels que ceux choisis dans le groupe constitué par des stabilisants thermiques, des charges, des composés colorants, des plastifiants, des systèmes de durcissement, et des accepteurs d'acide.

8. Procédé selon la revendication 7, la composition (C) comprenant un ou plus d'un composé colorant, choisi dans le groupe constitué par un composé colorant luminescent [composé (L)] et un composé colorant non luminescent [composé (N-L)].

9. Procédé selon l'une quelconque des revendications précédentes, le procédé comportant une étape d'impression de couches du matériau de pièce, selon une technique choisie dans le groupe constitué par des techniques à base d'extrusion, la projection, le frittage laser sélectif, la projection de poudre/liant, la fusion par faisceau d'électrons et la stéréolithographie.

10. Procédé selon l'une quelconque des revendications précédentes, le procédé comportant l'impression de couches d'une structure de support à partir d'un matériau de support, et l'impression de couches de l'objet tridimensionnel à partir dudit matériau de pièce en coordination avec l'impression des couches de la structure de support, dans lequel au moins une partie des couches imprimées de la structure de support soutient les couches imprimées de l'objet tridimensionnel, et ensuite le retrait d'au moins une partie de la structure de support pour l'obtention de l'objet (3D).

11. Procédé selon l'une quelconque des revendications précédentes, ledit procédé comprenant :
(i) une étape d'introduction d'une alimentation du matériau de pièce, comme détaillé ci-dessus, à l'état fluide dans un passage d'écoulement d'une buse de décharge sur une tête de distribution déplaçable mécaniquement, ladite buse possédant une sortie de distribution au niveau d'une extrémité de celle-ci en communication fluidique avec ledit passage d'écoulement ;
(ii) la distribution dudit matériau de pièce à partir de ladite sortie de distribution en tant que flux de fluide coulant, continu à une température prédéterminée au-dessus de la température à laquelle il solidifie sur un élément de base positionné à proximité immédiate de ladite buse ;
(iii) simultanément à la distribution dudit matériau de pièce sur ledit élément de base, la génération de manière mécanique d'un mouvement relatif dudit élément de base et de ladite tête de distribution l'un par rapport à l'autre en un motif prédéterminé pour former une première couche dudit matériau sur ledit élément de base ; et
(iv) le déplacement de ladite tête de distribution à une distance d'épaisseur de couche prédéterminée de ladite première couche, et
(v) après que la partie de ladite première couche adjacente à ladite buse a refroidi et solidifié, la distribution d'une deuxième couche dudit matériau de pièce à l'état fluide sur ladite première couche à partir de ladite sortie de distribution tout en déplaçant simultanément ledit élément de base et ladite tête de distribution l'un par rapport à l'autre, ladite deuxième couche solidifiant lors du refroidissement et adhérant à ladite première couche pour former un article tridimensionnel ; et
(vi) la formation de multiples couches dudit matériau de pièce construites au sommet de la couche générée précédemment en plusieurs passes ou par des séquences répétées des étapes (i) à (v), comme détaillé ci-dessus.

12. Procédé selon l'une quelconque des revendications précédentes, ledit procédé comprenant une étape supplémentaire dans laquelle l'objet (3D) est soumis à une étape supplémentaire causant la réticulation de manière chimique du polymère (F-TPE) .

13. Procédé selon la revendication 12, la composition (C) comprenant des systèmes de durcissement facilitant la réticulation du polymère (F-TPE).
